(19) Europäisches Patentamt
European Patent Office
Office européen des brevets

(11) **EP 2 908 485 A1**

(12) **EUROPEAN PATENT APPLICATION**

(43) Date of publication:
**19.08.2015 Bulletin 2015/34**

(51) Int Cl.:
**H04L 12/851** (2013.01) **H04L 12/26** (2006.01)

(21) Application number: **14305223.1**

(22) Date of filing: **18.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Tsang, Ing-Jyh**
**2018 Antwerpen (BE)**
• **De Schepper, Koen**
**2018 Antwerpen (BE)**

(74) Representative: **D'Halleweyn, Nele Veerle Trees Gertrudis et al**
**Arnold & Siedsma**
**Bezuidenhoutseweg 57**
**2594 AC The Hague (NL)**

(54) **Network device and method for packet flow classification**

(57)    A network device for packet flow classification of packet flows received at the network device in a packet transport network, comprising a receiving unit configured for receiving a packet flow; a monitoring and determining unit configured for monitoring said received packet flow during a plurality of consecutive sample time frames, and for determining for each sample time frame thereof a value indicating whether packets have been received; a storing unit configured for storing, after each sample time frame, the determined value in a flow vector storage, and for removing a previously stored value from said flow vector storage, said flow vector storage storing n determined values such as to cover a flow window corresponding with n sample time frames, n being greater than 1; a classifying unit configured for classifying said packet flow using said flow vector storage.

FIG. 3

## Description

Field of Invention

The field of the invention relates to packet flow classification of packet flows received at a network device in a packet transport network. Particular embodiments relate to a network device for packet flow classification, a method for packet flow classification and a computer program for performing the method.

Background

Congestion or rate-control is typically done at a coarse-grained level; for example when a queue is filled, packets are indiscriminately dropped from heavy and light traffic flows. Congestion control based on queue dropping (e.g. (Weighted) Random Early Drop - (W)RED)) is however not sufficiently fine-grained to discriminate flow traffic. This may cause unnecessary delay to real-time interactive applications (e.g. Voice over IP (VoIP), online gaming, and video streaming) as opposed to non-priority traffic, such as bulk file transfer. Finer-grained methods to characterize flow behaviour at a network element are time-consuming and resource-intensive. For example, Deep Packet Inspection (DPI) is used to characterize flows, but it requires intensive flow state information. Scaling use of these techniques is difficult or impossible for increasingly diverse and real-time traffic.

Summary

Embodiments of the invention aim to improve the efficiency and effectiveness of packet flow classification with low resource requirements.

According to a first aspect of the invention there is provided a network device for packet flow classification of packet flows received at the network device in a packet transport network. The network device comprises a receiving unit configured for receiving a packet flow. The network device also comprises a monitoring and determining unit, which is configured for monitoring said received packet flow during a plurality of consecutive sample time frames, and which is also configured for determining for each sample time frame thereof a value indicating whether packets have been received. The network device comprises a storing unit which is configured for storing, after each sample time frame, the determined value in a flow vector storage, and which is configured for removing a previously stored value from said flow vector storage. Said flow vector storage stores n determined values such as to cover a flow window corresponding with n sample time frames, n being greater than 1. The network device also comprises a classifying unit configured for classifying said packet flow using said flow vector storage. In other words, by storing the determined value after each sample time frame in the flow vector storage and by removing the previously stored value from the flow vector storage, the size of the flow vector storage can be kept finite, since values can be removed after some time..

Embodiments are based *inter alia* on the inventive insight that monitoring and storing occurrence information (i.e. whether and/or how many packets have been received) in flow vectors allows to quickly classify the packet flows using the flow vectors, thereby improving efficiency and effectiveness of packet flow classification. In this manner, real-time interactive traffic can be adequately classified. Moreover, fast characterization also allows to manage packet flows (e.g. by prioritizing or re-scheduling packets, or by notifying senders to adjust their transport parameters), allowing for an improved packet queuing and scheduling and overall improved network traffic.

The sample time frames are preferably of equal time length. Also, the sample time frames may be contiguous (i.e. leaving no gaps in-between), thereby covering a continuous time window, but they need not be contiguous, the time window thereby covering a longer time length than the sum total of the time lengths of the separate sample time frames.

According to an embodiment, said flow vector storage is configured for operating as a first-in-first-out stack such that the flow vector storage comprises the last n determined values. In this manner, available storage resources are used economically while allowing to take into account information that is recent and relevant for classification.

According to an embodiment, said monitoring and determining unit is configured for determining for each sample time frame a binary value indicating whether packets have been received in said sample time frame. In this manner, available storage resources are used efficiently, since storing a binary value consumes a minimal amount of memory. Moreover, determining a binary value facilitates the operation of the storing unit using bit-shifting.

According to another embodiment, said monitoring and determining unit is configured for measuring, for each sample time frame, a value which is representative for the number of packets that has been received during the sample time frame. According to a preferred embodiment, said value is an integer value, but other types of values could be used as well. In this manner, a more precise representation of the number of packets that has been received can be used, improving the accuracy of the classification.

According to a preferred embodiment, the network device comprises a calculating unit, which is configured for using two or more values stored in the flow vector storage to calculate a summary value representative for said two or more values. Said calculating unit is configured for performing said calculating of a summary value periodically with a period which is equal to or greater than two sample time frames. In this embodiment, said storing unit is configured for storing said calculated summary value in an extended flow vector storage, and for removing a previously stored value from said extended flow vector storage. Also, said classifying unit is further configured for classifying said packet flow using said extended flow vector. In this manner, the network device can take into account information about time frames that lie further into the past, without overburdening storage requirements.

According to a more developed embodiment, the period is equal to the flow window and the extended flow vector storage stores m summary values such as to cover an extended flow window corresponding with m previous flow windows, m being equal to or greater than 1. In this manner, for every flow window of the m previous flow windows, a single corresponding summary value is stored in the extended flow window, and each of the m summary values represents only the values of a single previous flow window.

According to another more developed embodiment, said calculating unit is configured for calculating said summary value as an integer value representing an average (or any other statistical function, such as variance, or moments of any order) of the n values stored in the flow vector storage. In this manner, the n values stored in the flow vector storage can be represented by a value that centrally characterizes them. Alternatively, using a rational number representation is more precise, but less wieldy.

According to another embodiment, said extended flow vector storage is configured for operating as a first-in-first-out stack such that the flow vector storage comprises the last m determined values. In this manner, available storage resources are used economically while allowing to take into account information that is recent and relevant for classification.

According to an exemplary embodiment, the classifying unit is configured for pre-processing the flow vector storage and/or the extended flow vector storage. Pre-processing may comprise filtering so as to remove noise and/or feature extraction so as to extract more salient features. In this manner, classification can be done faster (using only the salient features) and more accurately (with less noise).

According to a further developed embodiment, the classifying unit is a machine-learning classifier trained for predicting a class label for the packet flow based on the values stored in the corresponding flow vector storage and/or extended flow vector storage. Machine-learning classifiers are decision models that are constructed using machine-learning algorithms. The machine-learning algorithm is typically given a set of training data, containing representative examples, to construct the decision model during a training or learning phase - here, the machine-learning classifier can be trained on template vectors representing manually labelled pre-selected or pre-generated flow vector storages (i.e. offline, supervised), or alternatively (or additionally) on live data (i.e. online, unsupervised; using actual flow vector storages). Typical machine-learning algorithms to construct machine-learning classifiers include artificial neural networks, support vector machines, decision trees, nearest neighbours, clustering techniques such as k-means clustering, etc. When a decision model has been constructed for a machine-learning classifier, the machine-learning classifier can be used (in other words: the model can be applied) to predict an appropriate class label for input data to be classified - here, the values stored in the flow vector storage and/or extended flow vector storage. Advantageously, the use of machine-learning classifiers simplifies classification, in that it is not necessary to manually label each possible sequence of values; the classifier automates labelling new data by learning and generalizing from a limited dataset of training examples. Moreover, machine-learning classifiers allow sufficiently fast classification to improve overall efficiency with low resource requirements.

According to another aspect of the invention there is provided a method for packet flow classification of packet flows at a network device in a packet transport network, comprising the steps of receiving a packet flow; monitoring said received packet flow during a plurality of consecutive sample time frames; and determining for each sample time frame thereof a value indicating whether packets have been received. The method also comprises the steps of storing, after each sample time frame, the determined value in a flow vector storage; removing a previously stored value from said flow vector storage, said flow vector storage storing n determined values such as to cover a flow window corresponding with n sample time frames, n being greater than 1; and classifying said packet flow based on the values stored in said flow vector.

According to an embodiment, said storing in said extended flow vector storage is performed in a first-in-first-out manner such that the flow vector storage comprises the last n determined values. In this manner, available storage resources are used economically while allowing to take into account information that is recent and relevant for classification.

According to an embodiment, said monitoring and determining unit comprises determining for each sample time frame a binary value indicating whether packets have been received in said sample time frame. In this manner, available storage resources are used efficiently, since storing a binary value consumes a minimal amount of memory. Moreover, determining a binary value facilitates the operation of the storing unit using bit-shifting.

According to another embodiment, said determining comprises measuring, for each sample time frame, a value which is representative for the number of packets that has been received during the sample time frame. According to a preferred embodiment, said value is an integer value, but other types of values could be used as well. In this manner, a more precise representation of the number of packets that has been received can be used, improving the accuracy of the classification.

According to a preferred embodiment, the method comprises using two or more values stored in the flow vector storage to calculate a summary value representative for said two or more values. Said calculating of a summary value is performed periodically with a period which is equal to or greater than two sample time frames. The method also comprises storing said calculated summary value in an extended flow vector storage, and removing a previously stored value from said extended flow vector storage; and classifying said packet flow based on the values stored in said extended flow vector. In this manner, the network device can take into account information about time frames that lie further into the past, without overburdening storage requirements.

According to a more developed embodiment, the period is equal to the flow window and the extended flow vector storage stores m summary values such as to cover an extended flow window corresponding with m previous flow windows, m being equal to or greater than 1. In this manner, for every flow window of the m previous flow windows, a single corresponding summary value is stored in the extended flow window, and each of the m summary values represents only the values of a single previous flow window.

According to another embodiment, said storing in said extended flow vector storage is performed in a first-in-first-out manner such that the flow vector storage comprises the last m determined values. In this manner, available storage resources are used economically while allowing to take into account information that is recent and relevant for classification.

According to another more developed embodiment, said summary value is calculated as an integer value representing an average (or any other statistical function, such as variance, or moments of any order) of the n values stored in the flow vector storage. In this manner, the n values stored in the flow vector storage can be represented by a value that centrally characterizes them. Alternatively, using a rational number representation is more precise, but less wieldy.

According to an exemplary embodiment, the method comprises pre-processing the flow vector storage and/or the extended flow vector storage to remove noise and/or to extract salient features. In this manner, classification can be done faster (using only the salient features) and more accurately (with less noise).

According to a further developed embodiment, said pre-processing comprises performing a convolution of the flow vector and/or extended flow vector with a kernel vector. In this manner, the flow vector and/or extended flow vector can be pre-processed before classification, for instance in order to remove noise, or to extract salient features for classification proper. Alternatively, instead of said pre-processing comprising performing a convolution operation, it is possible for said classifying to comprise performing such a convolution operation, since use of only the kernel vector without additionally using a machine-learning classifier may represent a simplified classification scheme. The skilled person will understand that besides convolution, other signal processing techniques are equally applicable, such as e.g. cross-correlation.

According to yet another embodiment, the method also comprises obtaining an identification of the packet flow (i.e. identifying separate packets as probably belonging to the same packet flow) by calculating a packet flow hash ID for said packet flow, based on one or more of the following: a source address; a destination address; a source port number; a destination port number; and a protocol type. Preferably, for TCP/IP (Transport Control Protocol / Internet Protocol) packet transport networks, the source address and destination address are the IP source and destination addresses. In this manner, packet flow identification is convenient and scalable, in that information that is already available is used in a way that requires little overhead.

According to another preferred embodiment, said classifying occurs periodically. The person skilled in the art understands that a period for the periodical occurrence can correspond with the extended flow window, with the flow window, or with the sample time frame, depending on the manner the flow vector storage is constructed. For instance, when an embodiment of the storing unit resets to zero a plurality of old values that are not yet to be deleted, it makes sense to classify immediately before or after the reset to zero, which typically happens when a new summary value is calculated and stored, after every flow window. In this manner, packet flow classification is done sufficiently frequently to show real-time changes of the packet flows, without overburdening the required calculation means.

According to another embodiment of the invention, there is provided a method for transmission control comprising a method according to any of the above described method embodiments, wherein packet scheduling and/or congestion control is performed based on the predicted class for the packet flow.

According to another aspect of the invention there is provided a computer program comprising computer-executable instructions to perform the method, when the program is run on a computer, of any one of the above methods.

The term 'average' will in this text be taken to mean 'some central or typical value'. Non-exhaustive examples of averages are a mean (arithmetic or otherwise), a median, a mode, etc. It can also take a form of any other statistical function, such as variance, or moments of any order.

Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

Figures 1A and 1B illustrate schematically embodiments of flow vector storages wherein values are stored over time.

Figure 2 illustrates schematically an embodiment of two simplified template vectors representing paced traffic and bursty traffic.

Figure 3 illustrates schematically an embodiment of a memory structure storing N flow vector storages.

Figure 4 illustrates schematically an embodiment of a memory structure storing five exemplary flow vector storages.

Figures 5A and 5B illustrate schematically embodiments of extended flow vector storages.

Figure 6 illustrates schematically another embodiment of an extended flow vector storage.

Figure 7 illustrates schematically an embodiment of a learning dataset comprising template vectors and corresponding classification labels.

Figure 8 illustrates schematically an embodiment of a network device according to the invention.

Figure 9 illustrates schematically another embodiment of a network device according to the invention.

Figures 10A and 10B illustrate schematically embodiments of methods according to the invention.

Description of embodiments

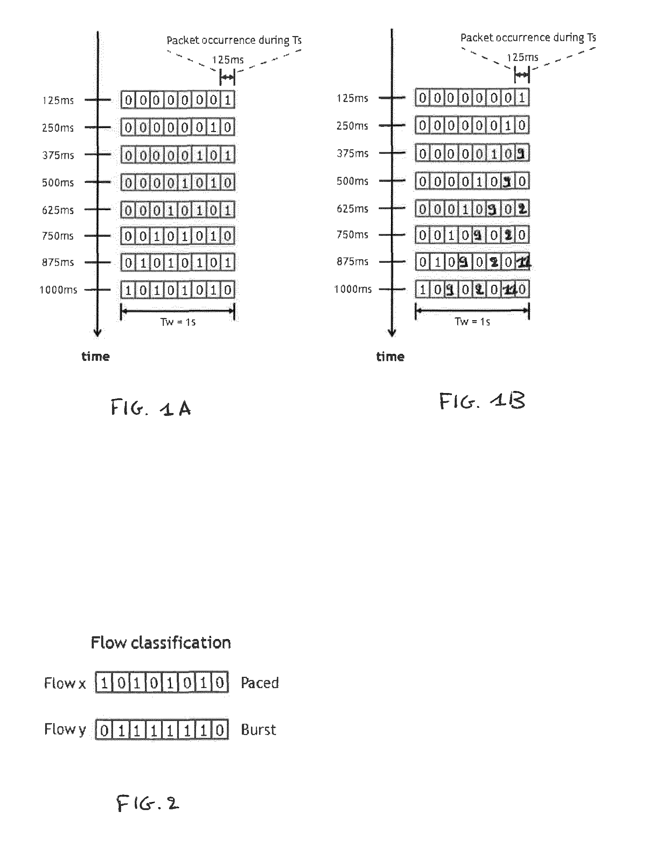

Figure 1A illustrates schematically an embodiment of a flow vector storage, wherein values are stored over time. The shown flow vector storage is used in a method for packet flow classification of packet flows that are received at a network device. The network device comprises a receiving unit which receives a packet flow. The packet flow is an ongoing data flow of received packets that are related. The received packet flow is monitored during a plurality of sample time frames Ts (here each 125ms), which are consecutive. These sample time frames Ts may have the same length or different lengths. For each of those sample time frames a value is determined indicating whether packets have been received. In this embodiment, a binary value is determined; i.e. a '1' indicates that one or more packets have been received during the sample time frame, whereas a '0' indicates that no packets have been received. When a value has been determined (i.e. after each sample time frame of 125ms, according to the time axis on the left of the figure), it is stored in a flow vector storage, which is here shown as a vector sequence of values. When a new value is stored in the flow vector storage, it is stored in the rightmost memory location of the vector sequence. Since the flow vector storage is finite, an old, previously stored value is removed from the flow vector storage. In this manner, the flow vector storage here stores 8 values, and thus covers a flow window Tw (here 1s) corresponding with 8 sample time frames. In the given example, Tw=1s and Ts=125ms. Preferably Tw=n*Ts with n an integer value greater than 2. The embodiment shown here stores and removes new and old values using an efficiently implementable left bit-shift, allowing improved time efficiency.

Figure 1B illustrates schematically another embodiment of a flow vector storage, wherein values are stored in a manner analogous to that of figure 1A. In this embodiment, the values that are measured for each sample time frame and that are stored in the flow vector storage are representative for the number of packets that has been received during the sample time frame. Here, the value is an integer value, but other schemes can be considered, e.g. using rational numbers or floating point numbers.

Figure 2 illustrates schematically an embodiment of two (simplified) template vectors. Template vectors are vectors that have been pre-selected from real-traffic flow vector storages or that have been specifically pre-generated, and that can be used as typical representations for certain kinds of traffic. Here, the two template vectors respectively represent paced traffic and bursty traffic. Paced traffic is characterized by the alternating ON/OFF binary values (i.e. the values '1' and '0'), which show that packets have only been received intermittently and in a more or less regular manner, whereas bursty traffic is characterized by longer sequences of ON values (i.e. the value '1'), which show that packets have been received in bursts.

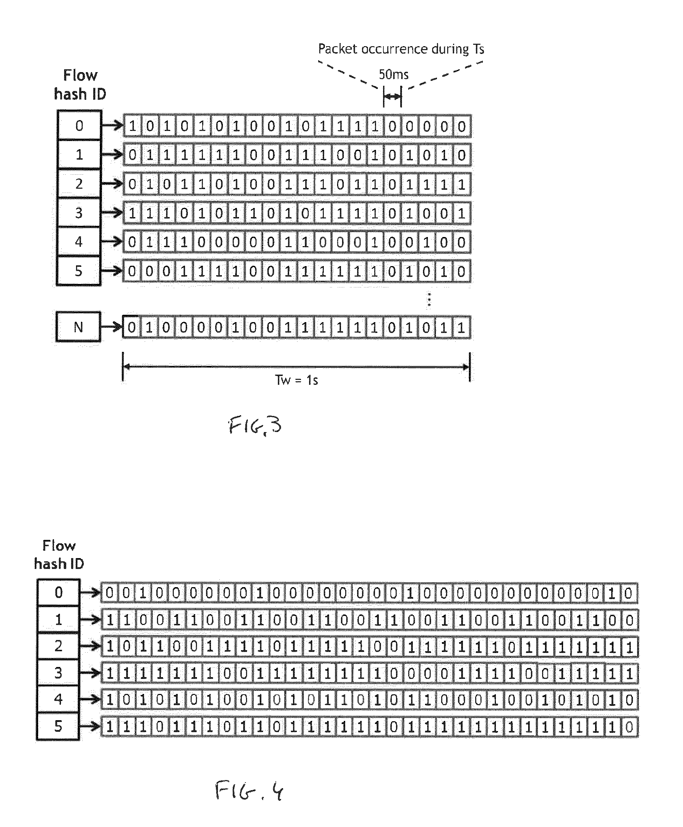

Figure 3 illustrates schematically an embodiment of a memory structure storing N flow vector storages, for N different packet flows. The different packet flows are distinguished by their flow hash IDs. A flow hash ID is calculated by e.g. hashing the address and port number of both source and destination of the packets, as well as the protocol that is used. In this manner, a uniquely distinguishing identification (the flow hash ID) can be obtained. Each separate flow vector storage is used to store for each sample time frame of the flow window of each packet flow a value that indicates whether packets have been received in said sample time frame, in a manner analogous to that discussed for figure 1A above. In this embodiment, the flow vector storages comprise 20 memory locations, each being used to store a value for a sample time frame Ts measuring 50ms of the flow window Tw measuring 1s. The skilled person will appreciate that more or fewer flow vector storages could be stored in the memory structure, that more or less than 20 values could be used per flow vector storage, and that the time lengths of the sample time frames and the flow window could be chosen differently to achieve coarser or finer granularity, depending on available resources.

Figure 4 illustrates schematically an embodiment of a memory structure storing five exemplary flow vector storages. In an analogous manner to that discussed for figure 3, a plurality of flow vector storages is stored for corresponding different packet flows that are distinguished by their flow hash IDs. The flow vector storages shown here are 'exemplary', in that this is a schematic representation - actual measurements of a real-life queue with aggregated packet flows are expected to yield more 'noisy' flow vector storages. In this embodiment, the flow vector storages are represented using 32-bit memory representations - therefore, there are $2^{32}$ = 4.294.967.296 possible flow vector storages, which - depending on the patterns of the values stored in the flow vector storages - will indicate different classes of packet flow behaviour, e.g.:

- Flow ID 0: Represents a low-bandwidth consuming packet flow, possibly a low-activity connection, with just keep-alive messages.

- Flow ID 1: Represents a paced UDP (User Datagram Protocol) flow, since TCP (Transmission Control Protocol) flow would be additively increasing the number of packets. This could e.g. be VoIP traffic.

- Flow ID 2: Represents a TCP flow in an additive-increase growing phase.

- Flow ID 3: Represents a TCP flow with a multiplicative-decrease occurrence, thus having a decreased transmission window. This could e.g. be video over TCP traffic.

- Flow ID 4: Represents a noisy packet flow pattern, with regular packet transmission.

- Flow ID 5: Represents a heavy-bandwidth consuming packet flow.

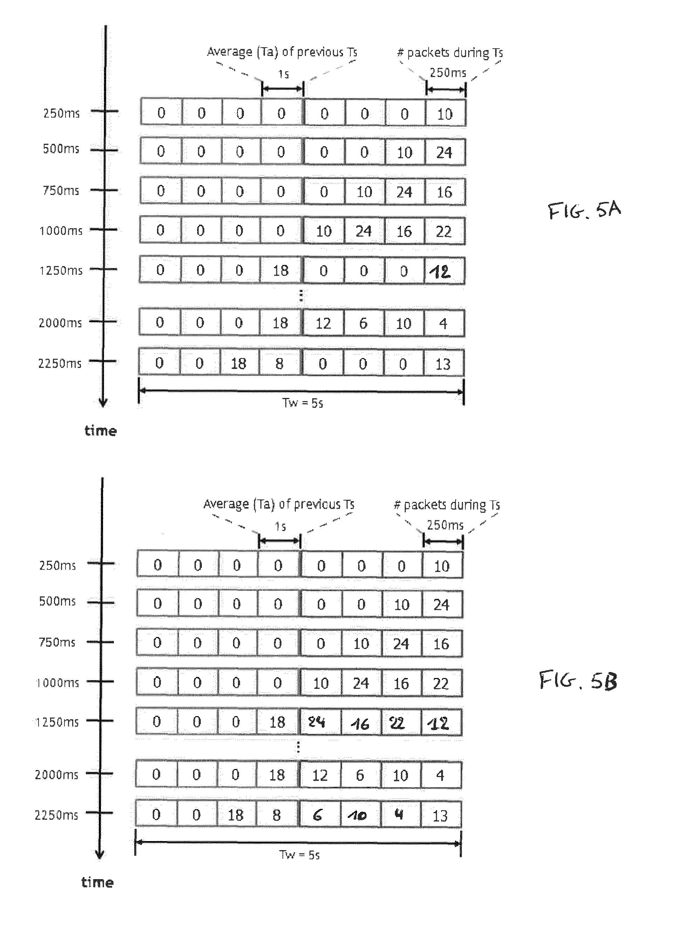

Figure 5A illustrates schematically an embodiment suitable to record longer time periods. To this end, the values stored in the flow vector storage are used to calculate a summary value (here, an average). The summary value is calculated here as an integer value representing an average of the four values stored in the flow vector storage. More specifically, the arithmetic mean is calculated. Other embodiments may however calculate other central or typical values as averages, and the skilled person may also consider using other indications representative of the values stored in the flow vector storage as summary values, such as a minimum or maximum value or any order moment value. Of course, it may be necessary to truncate or round values, depending on the number representation that is chosen. The summary value is then stored in an extended flow vector storage. In the embodiment shown here, the extended flow vector storage comprises four summary values (the leftmost four values). When a new value is stored in the flow vector storage (here: at every sample time frame, i.e. 250ms), the 'old' leftmost value of the flow vector storage is removed or dropped by a left bit-shift, and the new value is stored or appended to the right (pushed). In this embodiment, the actual bit-shift of the flow vector storage does not influence the extended flow vector storage. The extended flow vector storage is changed (i.e. a new summary value is calculated and stored) periodically, here with a period equal to the pre-determined flow window (four times 250ms or 1s). In this embodiment, it can be seen that after four sample time frames (i.e. after 1s) a first summary value is calculated as an average of the four values stored in the flow vector storage (72/4=18) and stored in the extended flow vector storage. When storing a new summary value in the extended flow vector storage, the values in the flow vector storage are reset to zero by the storing unit. Another four sample time frames (the flow window) later, a second summary value is calculated (32/4=8) and stored in the extended flow vector storage. It can be seen that this operation likewise involves bit-shifting the extended flow vector storage to the left. The choice has here been made to perform this calculating and storing of a summary value periodically every flow window in order to keep the summary values indicative of the last four flow vector storage values. Preferably, the step of classifying the packet flow based on the flow vector storage is performed at every time step (here: every 250ms), but to save computational resources, it may be useful to classify, say, every four time steps, corresponding here to the original flow window. The skilled person will appreciate that many schemes determining the frequency of classification are possible, depending on available resources.

Figure 5B illustrates schematically another embodiment suitable to record longer time periods. This embodiment is analogous to the embodiment discussed in figure 5A, but in this embodiment, the values stored in the flow vector storage are not reset to zero after having calculated a summary value. This has the benefit of keeping more information about past traffic for more accurate classification.

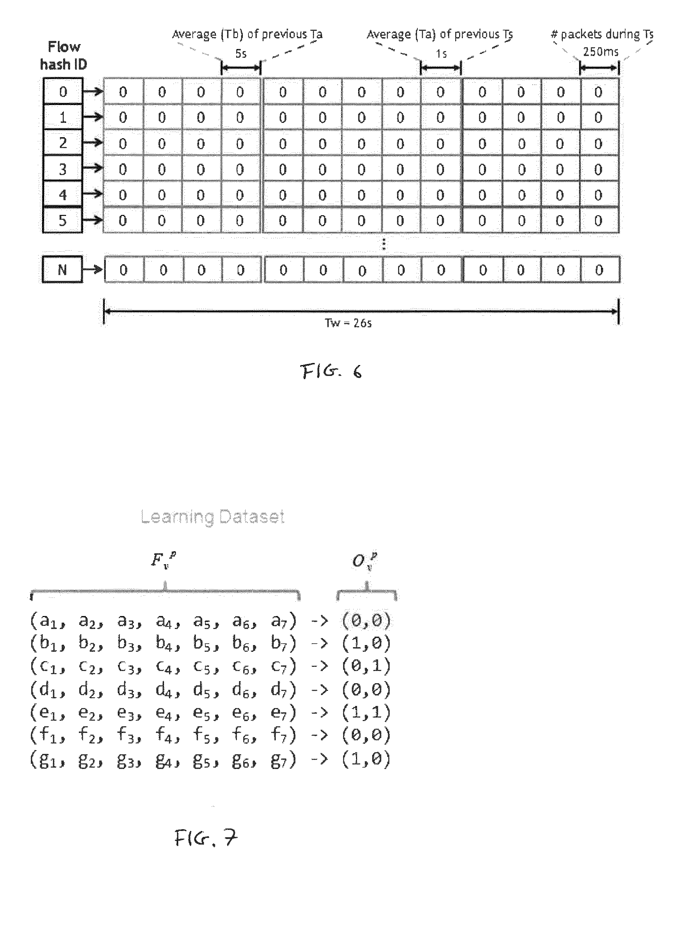

Figure 6 illustrates schematically another embodiment of an extended flow vector storage. In this embodiment, it is shown that summary values (the leftmost four values) can be calculated using values (the middle five values) that are themselves summary values, stored in an extended flow vector storage and calculated using values stored in the flow vector storage (comprising the rightmost four values). In the embodiment, four values for four sample time frames Ts of 250ms comprised in a flow window of 1s are used to calculate a summary value, which indirectly represents a time length of 1s (Ta). There are five such summary values, which are stored in an extended flow vector storage (comprising the middle five values and the rightmost four values). These summary values are used to calculate another summary value, which indirectly represents a time length of 5s (Tb). There are four such summary values, which are stored in another extended flow vector storage (comprising the leftmost four values). It is clear to the skilled person that approaches like this one allow to cover a longer total time length of the packet flow (in this embodiment 26s), thereby improving the quality of packet flow classification, at a cost of increased memory requirements.

The characteristic or classification of a packet flow can be determined by using convolution over its flow window. Given that the packet flow is represented by flow vector storage f, applying a convolution over a vector g, designed to extract certain characteristics, yields a simple classification scheme for the packet flow. Thus, h = f*g, using discrete convolution, for example the convolution function can be made to sum on the number of packets or it can be a function to extract how paced is the packet flow.

The discrete convolution follows as:

$$ h = (f * g)(\tau) = \sum_{t=-\infty}^{t=\infty} f(t)g(\tau - t) $$

wherein $f(\tau)$ is the "input" from the flow vector storage stored as a memory representation, and $g(\tau)$ represents the "kernel" of the convolution. In the discrete case, these are represented by vectors, such $a=[a_1 a_2 a_3...a_m]$, which represents a finite set of the input $F$; $b = [b_1 b_2 b_3...b_n]$ represents the kernel, and $c=[c_1 c_2 c_3...c_{m+n-1}]$, the resulting vector as formulated below:

$$ c_x = \sum_u a_u b_{x-u+1} $$

where $u$ ranges over the valid subscripts. A simple adaptation for the discrete binary are:

$$ c_y = \bigwedge_u a_u b_{y-u+1} $$

$$ c_z = \bigvee_u a_u b_{z-u+1} $$

wherein $\wedge, \vee$ are defined as the meet (logical junction) and join (logical disjunction) operator respectively. Applying kernel $b=[1,1/2,1]$ to $c_y$ and $c_z$ yields two different filters:

    'Light flow' filter: $c_y$ applying kernel $b = [1,1/2,1]$ to the flow vector storage with flow hash ID 0 of figure 4, i.e. $a = [0010000001000000001000000000010]$ will yield a vector with all '0's, as (only pattern 11 and 111 will yield 1. In other words, if there are no consecutive packets $c_y$ will filter to 0.

    'Heavy flow' filter: $c_z$ applying the same kernel $b= [1,1/2,1]$ on $a=[1110111011011111101111111111110]$ (the

flow vector storage with flow hash ID 5 of figure 4) will yield a vector with all '1's, thus identifying heavy flows. In other words, if there is no consecutive "no packet" $c_z$ will filter to 1.

In the example above, discrete convolution was used for a very crude classification scheme for the case of binary memory representation. Convolution (or cross-correlation or other discrete signal processing techniques) is generally used as a filter, to remove "noise" information or to operate as a feature extraction function, as a pre-processing technique to be then combined with classification methods, such as e.g. classical machine-learning methods like artificial neural networks (NN), support vector machines, decision trees, nearest neighbours, clustering techniques such as k-means clustering, etc. Applying a supervised NN model (using back-propagation) is straightforward; a representative learning set containing a collection of flows can be used to create the NN classifier, using a set of output flow vectors storage, wherein each of the flow vector storage patterns is known (or defined) *a priori* to represent different packet flow characteristics (such as real time traffic, video, VoIP or heavy download, etc). The NN is then trained to be a classifier, which can additionally be used for real-time packet flow prioritization, where packets from packet flows classified as having priority will be queued or scheduled accordingly, preferably improving overall network traffic quality and link utilization. In fact, classification of packet flows in real-time allows better congestion control, with a fair share and low-latency mechanism. In general, this allows real-time manipulation of packet flows, which can be used to modify their behaviour in terms of transport characteristics (including e.g. caching, delaying, pacing, etc.).

Figure 7 illustrates schematically an embodiment of a learning dataset comprising template vectors $F_v^l$ (a collection of vectors $v_i$), representing values stored for sample time frames of a flow window of packet flows, with corresponding classification labels $p_j$ (i.e. learning classes), such as VoIP or video traffic. In offline supervised learning the dataset is collected and classified by an expert (i.e. the supervisor) and is used to train a learning system. The template vectors $F_v^p$ with equivalent classification output vectors $O_v^p$ representing 4 classes of packet flows, are fed to the neural network, whereas the weights and threshold are calculated during a learning phase. In the classification phase (applied in real-time) a flow vector (e.g. as depicted in figure 4) is fed to the NN, whereas the classification is computed according to the topology, weights and threshold derived in the learning phase. Alternatively or additionally, other machine-learning algorithms could be used to learn and classify traffic flows according to the proposed method, even online unsupervised learning techniques.

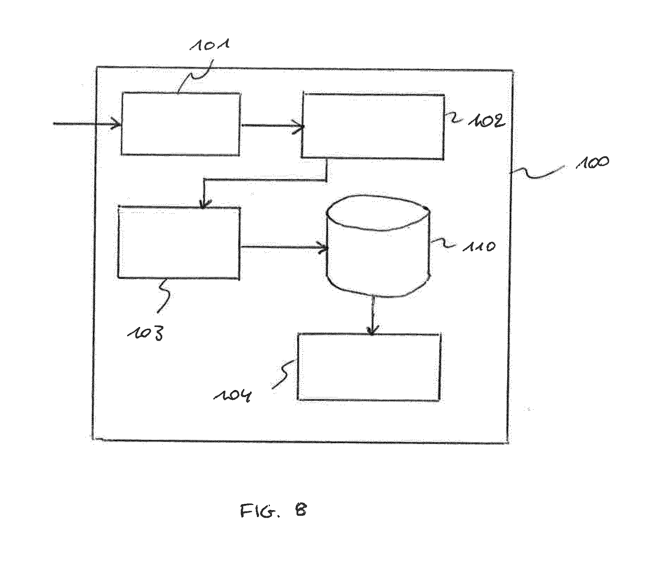

Figure 8 illustrates schematically an embodiment of a network device 100 according to the invention. The network device 100 comprises a receiving unit 101 configured for receiving a packet flow. The network device 100 also comprises a monitoring and determining unit 102 configured for monitoring said received packet flow during a plurality of consecutive sample time frames, and for determining for each sample time frame thereof a value indicating whether packets have been received. The network device 100 further comprises a storing unit 103 configured for storing, after each sample time frame, the determined value in a flow vector storage 110, and for removing a previously stored value from said flow vector storage 110, said flow vector storage 110 storing n determined values such as to cover a flow window corresponding with n sample time frames, n being greater than 1. The network device 100 further also comprises a classifying unit 104 configured for classifying said packet flow based on the values stored in said flow vector storage 110.

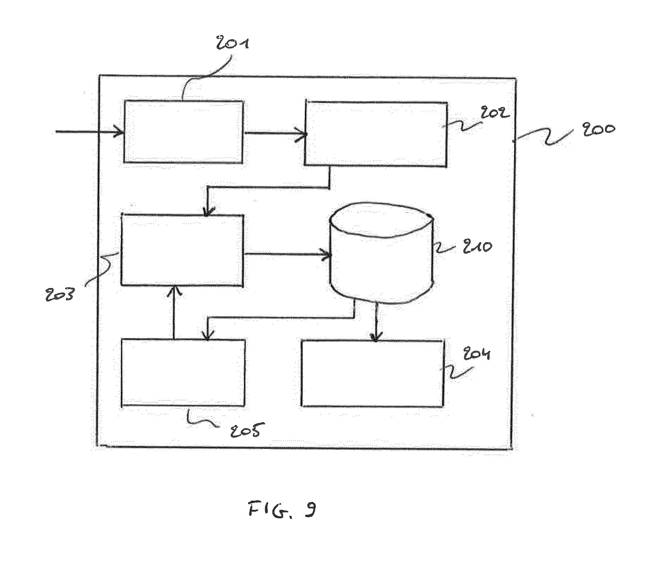

Figure 9 illustrates schematically another embodiment of a network device 200 according to the invention. The network device 200 comprises a receiving unit 201 configured for receiving a packet flow. The network device 200 also comprises a monitoring and determining unit 202 configured for monitoring said received packet flow during a plurality of consecutive sample time frames, and for determining for each sample time frame thereof a value indicating whether packets have been received. The network device 200 further comprises a storing unit 203 configured for storing, after each sample time frame, the determined value in an extended flow vector storage 210, and for removing a previously stored value from said extended flow vector storage 210, said extended flow vector storage 210 storing n determined values such as to cover a flow window corresponding with n sample time frames, n being greater than 1. The network device 200 also comprises a calculating unit 205 configured for using two or more values stored in the extended flow vector storage 210 to calculate a summary value representative for said two or more values; wherein said calculating unit 205 is configured for performing said calculating of a summary value periodically with a period which is equal to or greater than two sample time frames. The storing unit 203 is also configured for storing said calculated summary value in the extended flow vector storage 210, and for removing a previously stored value from said extended flow vector storage 210. The network device 200 further also comprises a classifying unit 204 configured for classifying said packet flow based on values stored in said flow vector storage 210. The classifying unit 204 is further configured for classifying said packet flow based on values stored in said extended flow vector storage 210.

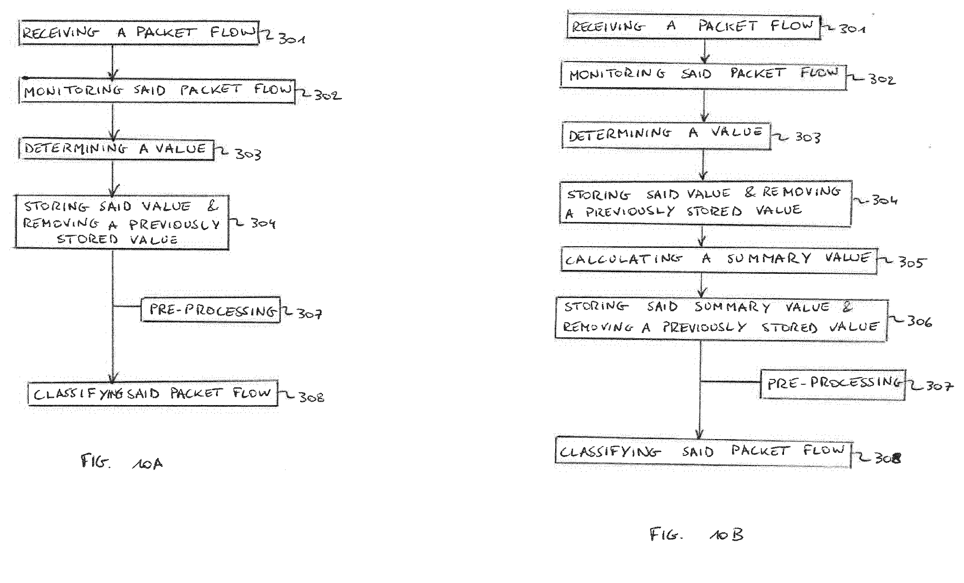

Figures 10A and 10B illustrate schematically embodiments of methods according to the invention. Figure 10A illustrates a first method, comprising the steps of receiving 301 a packet flow; monitoring 302 said packet flow during a plurality of consecutive sample time frames; determining 303 for each sample time frame thereof a value indicating whether packets have been received; storing 304, after each sample time frame, said determined value in a flow vector storage and removing 304 a previously stored value from said flow vector storage; optionally pre-processing 307 said flow vector storage (for instance by filtering the flow vector storage for noise-removal and/or for feature extraction); and classifying 308 said packet flow based on the value stored in said flow vector.

Figure 10B illustrates a second method analogous to the first method but further comprising the steps of periodically calculating 305 a summary value using two or more values stored in the flow vector storage; storing 306 said calculated summary value in an extended flow vector storage, and removing 306 a previously stored value from said extended flow vector storage; and classifying 308 said packet flow based on the values stored in said extended flow vector storage.

Whilst the principles of the invention have been set out above in connection with specific embodiments, it is to be understood that this description is merely made by way of example and not as a limitation of the scope of protection which is determined by the appended claims.

**Claims**

1. A network device for packet flow classification of packet flows received at the network device in a packet transport network, comprising:

    - a receiving unit configured for receiving a packet flow;
    - a monitoring and determining unit configured for monitoring said received packet flow during a plurality of consecutive sample time frames, and for determining for each sample time frame thereof a value indicating whether packets have been received;
    - a storing unit configured for storing, after each sample time frame, the determined value in a flow vector storage, and for removing a previously stored value from said flow vector storage, said flow vector storage storing n determined values such as to cover a flow window corresponding with n sample time frames, n being greater than 1;
    - a classifying unit configured for classifying said packet flow using said flow vector storage.

2. The network device of claim 1, wherein said flow vector storage is configured for operating as a first-in-first-out stack such that the flow vector storage comprises the last n determined values.

**3.** The network device of claim 1 or 2, wherein said monitoring and determining unit is configured for determining for each sample time frame a binary value indicating whether packets have been received in said sample time frame.

**4.** The network device of claim 1 or 2, wherein said monitoring and determining unit is configured for measuring, for each sample time frame, a value which is representative for the number of packets that has been received during the sample time frame.

**5.** The network device of any one of the previous claims, comprising:

- a calculating unit configured for using two or more values stored in the flow vector storage to calculate a summary value representative for said two or more values; wherein said calculating unit is configured for performing said calculating of a summary value periodically with a period which is equal to or greater than two sample time frames;
and wherein:
- said storing unit is configured for storing said calculated summary value in an extended flow vector storage, and for removing a previously stored value from said extended flow vector storage; and
- said classifying unit is further configured for classifying said packet flow using said extended flow vector storage.

**6.** The network device of claim 5, wherein the period is equal to the flow window and the extended flow vector storage stores m summary values such as to cover an extended flow window corresponding with m previous flow windows, m being equal to or greater than 1.

**7.** The network device of claim 6, wherein said extended flow vector storage is configured for operating as a first-in-first-out stack such that the flow vector storage comprises the last m determined values.

**8.** The network device of any one of the claims 5-7, wherein said calculating unit is configured for calculating said summary value as an integer value representing an average of the n values stored in the flow vector storage.

**9.** The network device of any of the previous claims, wherein the classifying unit is a machine-learning classifier trained for predicting a class label for the packet flow based on the values stored in the corresponding flow vector storage and/or extended flow vector storage.

**10.** A method for packet flow classification of packet flows at a network device in a packet transport network, comprising the steps of:

- receiving a packet flow;
- monitoring said received packet flow during a plurality of consecutive sample time frames;
- determining for each sample time frame thereof a value indicating whether packets have been received;
- storing, after each sample time frame, the determined value in a flow vector storage;
- removing a previously stored value from said flow vector storage, said flow vector storage storing n determined values such as to cover a flow window corresponding with n sample time frames, n being greater than 1;
- classifying said packet flow based on the values stored in said flow vector.

**11.** The method of claim 10, wherein said monitoring and determining unit comprises

- determining for each sample time frame a binary value indicating whether packets have been received in said sample time frame; or
- measuring, for each sample time frame, a value which is representative for the number of packets that has been received during the sample time frame.

**12.** The method of claim 10 or 11, comprising:

- periodically calculating a summary value using two or more values stored in the flow vector storage, with a period which is equal to or greater than two sample time frames;
- storing said calculated summary value in an extended flow vector storage, and removing a previously stored value from said extended flow vector storage; and
- classifying said packet flow based on the values stored in said extended flow vector storage.

**13.** The method of claim 12, wherein the period is equal to the flow window and the extended flow vector storage stores m summary values such as to cover an extended flow window corresponding with m previous flow windows, m being equal to or greater than 1.

**14.** The method of any one of the claims 12-13, comprising:

- calculating said summary value as an integer value representing an average of the n values stored in the flow vector storage; and/or
- pre-processing the flow vector storage and/or the extended flow vector storage to remove noise and/or to extract salient features.

**15.** A computer program comprising computer-executable instructions to perform the method, when the program is run on a computer, of any one of the claims 10-14.

Packet occurrence during Ts

125ms

| 125ms | 0 0 0 0 0 0 0 1 |
| 250ms | 0 0 0 0 0 0 1 0 |
| 375ms | 0 0 0 0 0 1 0 1 |
| 500ms | 0 0 0 0 1 0 1 0 |
| 625ms | 0 0 0 1 0 1 0 1 |
| 750ms | 0 0 1 0 1 0 1 0 |
| 875ms | 0 1 0 1 0 1 0 1 |
| 1000ms | 1 0 1 0 1 0 1 0 |

Tw = 1s

time

FIG. 1A

Packet occurrence during Ts

125ms

| 125ms | 0 0 0 0 0 0 0 1 |
| 250ms | 0 0 0 0 0 0 1 0 |
| 375ms | 0 0 0 0 0 1 0 9 |
| 500ms | 0 0 0 0 1 0 9 0 |
| 625ms | 0 0 0 1 0 9 0 2 |
| 750ms | 0 0 1 0 9 0 2 0 |
| 875ms | 0 1 0 9 0 2 0 11 |
| 1000ms | 1 0 9 0 2 0 11 0 |

Tw = 1s

time

FIG. 1B

Flow classification

Flow x  | 1 0 1 0 1 0 1 0 |  Paced

Flow y  | 0 1 1 1 1 1 1 0 |  Burst

FIG. 2

Packet occurrence during Ts

50ms

Flow
hash ID

| 0 | → | 1 0 1 0 1 0 1 0 0 1 0 1 1 1 1 0 0 0 0 0 |
| 1 | → | 0 1 1 1 1 1 1 0 0 1 1 1 0 0 1 0 1 0 1 0 |
| 2 | → | 0 1 0 1 1 0 1 0 0 1 1 1 0 1 1 0 1 1 1 1 |
| 3 | → | 1 1 1 0 1 0 1 1 0 1 0 1 1 1 1 0 1 0 0 1 |
| 4 | → | 0 1 1 1 0 0 0 0 0 1 1 0 0 0 1 0 0 1 0 0 |
| 5 | → | 0 0 0 1 1 1 1 0 0 1 1 1 1 1 1 0 1 0 1 0 |

⋮

| N | → | 0 1 0 0 0 0 1 0 0 1 1 1 1 1 1 0 1 0 1 1 |

Tw = 1s

FIG.3

Flow
hash ID

| 0 | → | 0 0 1 0 0 0 0 0 0 1 0 0 0 0 0 0 0 0 1 0 0 0 0 0 0 0 0 0 0 0 1 0 |
| 1 | → | 1 1 0 0 1 1 0 0 1 1 0 0 1 1 0 0 1 1 0 0 1 1 0 0 1 1 0 0 1 1 0 0 |
| 2 | → | 1 0 1 1 0 0 1 1 1 0 1 1 1 1 0 0 1 1 1 1 1 0 1 1 1 1 1 1 |
| 3 | → | 1 1 1 1 1 1 1 0 0 1 1 1 1 1 1 1 0 0 0 0 1 1 1 1 0 0 1 1 1 1 1 1 |
| 4 | → | 1 0 1 0 1 0 1 0 0 1 0 1 0 1 1 0 1 0 1 1 0 0 0 1 0 0 1 0 1 0 1 0 |
| 5 | → | 1 1 1 0 1 1 1 0 1 1 0 1 1 1 1 1 1 0 1 1 1 1 1 1 1 1 1 1 1 1 1 0 |

FIG.4

Average (Ta) of previous Ts | 1s | # packets during Ts | 250ms

| 250ms | 0 | 0 | 0 | 0 | 0 | 0 | 0 | 10 |
| 500ms | 0 | 0 | 0 | 0 | 0 | 0 | 10 | 24 |
| 750ms | 0 | 0 | 0 | 0 | 0 | 10 | 24 | 16 |
| 1000ms | 0 | 0 | 0 | 0 | 10 | 24 | 16 | 22 |
| 1250ms | 0 | 0 | 0 | 18 | 0 | 0 | 0 | 12 |
| ⋮ |
| 2000ms | 0 | 0 | 0 | 18 | 12 | 6 | 10 | 4 |
| 2250ms | 0 | 0 | 18 | 8 | 0 | 0 | 0 | 13 |

Tw = 5s

time

FIG. 5A

Average (Ta) of previous Ts | 1s | # packets during Ts | 250ms

| 250ms | 0 | 0 | 0 | 0 | 0 | 0 | 0 | 10 |
| 500ms | 0 | 0 | 0 | 0 | 0 | 0 | 10 | 24 |
| 750ms | 0 | 0 | 0 | 0 | 0 | 10 | 24 | 16 |
| 1000ms | 0 | 0 | 0 | 0 | 10 | 24 | 16 | 22 |
| 1250ms | 0 | 0 | 0 | 18 | 24 | 16 | 22 | 12 |
| ⋮ |
| 2000ms | 0 | 0 | 0 | 18 | 12 | 6 | 10 | 4 |
| 2250ms | 0 | 0 | 18 | 8 | 6 | 10 | 4 | 13 |

Tw = 5s

time

FIG. 5B

13

FIG. 6

Learning Dataset

$$
\begin{array}{ll}
F_v^p & O_v^p \\
(a_1, a_2, a_3, a_4, a_5, a_6, a_7) \rightarrow (0,0) \\
(b_1, b_2, b_3, b_4, b_5, b_6, b_7) \rightarrow (1,0) \\
(c_1, c_2, c_3, c_4, c_5, c_6, c_7) \rightarrow (0,1) \\
(d_1, d_2, d_3, d_4, d_5, d_6, d_7) \rightarrow (0,0) \\
(e_1, e_2, e_3, e_4, e_5, e_6, e_7) \rightarrow (1,1) \\
(f_1, f_2, f_3, f_4, f_5, f_6, f_7) \rightarrow (0,0) \\
(g_1, g_2, g_3, g_4, g_5, g_6, g_7) \rightarrow (1,0)
\end{array}
$$

FIG. 7

FIG. B

EP 2 908 485 A1

FIG. 9

16

RECEIVING A PACKET FLOW — 301

↓

MONITORING SAID PACKET FLOW — 302

↓

DETERMINING A VALUE — 303

↓

STORING SAID VALUE & REMOVING A PREVIOUSLY STORED VALUE — 304

PRE-PROCESSING — 307

↓

CLASSIFYING SAID PACKET FLOW — 308

FIG. 10A

RECEIVING A PACKET FLOW — 301

↓

MONITORING SAID PACKET FLOW — 302

↓

DETERMINING A VALUE — 303

↓

STORING SAID VALUE & REMOVING A PREVIOUSLY STORED VALUE — 304

↓

CALCULATING A SUMMARY VALUE — 305

↓

STORING SAID SUMMARY VALUE & REMOVING A PREVIOUSLY STORED VALUE — 306

PRE-PROCESSING — 307

↓

CLASSIFYING SAID PACKET FLOW — 308

FIG. 10B

## EUROPEAN SEARCH REPORT

Application Number

EP 14 30 5223

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 975 592 B1 (SEDDIGH NABIL N [CA] ET AL) 13 December 2005 (2005-12-13) * column 3, line 66 - column 4, line 57 * * table I * * column 6, line 19 - line 33 * ----- | 1-15 | INV. H04L12/851 ADD. H04L12/26 |

TECHNICAL FIELDS SEARCHED (IPC)

H04L

The present search report has been drawn up for all claims

| Place of search | Date of completion of the search | Examiner |
|---|---|---|
| The Hague | 7 August 2014 | Tsuchiya, Kuni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 30 5223

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2014

| Patent document cited in search report | Publication date | Patent family member(s) | Publication date |
|---|---|---|---|
| US 6975592 B1 | 13-12-2005 | NONE | |

EPO FORM P0459

For more details about this annex : see Official Journal of the European Patent Office, No. 12/82